# EUROPEAN PATENT SPECIFICATION

(11) **EP 2 130 582 B1**
(45) Date of publication and mention of the grant of the patent: **15.03.2017**
(21) Application number: 08738799.9
(22) Date of filing: 25.03.2008
(51) Int. Cl.: B01J 23/58, B01D 53/94, B01J 37/02, F01N 3/28, B01J 23/00

(54) **CATALYST FOR EXHAUST GAS PURIFICATION**
ABGASREINIGUNGSKATALYSATOR
CATALYSEUR POUR LA PURIFICATION DE GAZ D'ÉCHAPPEMENT

(30) Priority: 05.04.2007 JP 2007099548
(43) Date of publication of application: 09.12.2009
(73) Proprietor: Cataler Corporation, Shizuoka 437-1492 (JP)
(72) Inventor: HORI, Asuka, Shizuoka 437-1492 (JP); HIRAI, Akimasa, Shizuoka 437-1492 (JP); NARITA, Keiichi, Shizuoka 437-1492 (JP)
(74) Representative: Mai, Dörr, Besier
(86) International application number: PCT/JP2008/055504
(87) International publication number: WO 2008/126662

(56) References cited:
- WO-A1-2007/040248
- WO-A2-02/083301
- JP-A- 08 024 644
- JP-A- 2004 298 813
- JP-A- 2006 035 043
- JP-A- 2006 205 050
- JP-A- 2006 263 581

## Description

### Technical Field

The present invention relates to an exhaust gas-purifying catalyst.

### Background Art

Jpn. Pat. Appln. KOKAI Publication No. 7-60117 discloses an exhaust gas-purifying catalyst produced by forming on a substrate first and second wash-coated layers in this order. The first and second wash-coated layers contain alumina. The first wash-coated layer further contains cerium, zirconium and palladium. The second wash-coated layer does not contain palladium and zirconium but further contains platinum, rhodium, barium and cerium. The palladium content of the first wash-coated layer falls within a range of 0.2 to 2.0 g/L. The platinum content and rhodium content of the second wash-coated layer fall within a range of 0.1 to 2.0 g/L and a range of 0.05 to 0.65 g/L, respectively.

When no platinum is used, increasing the rhodium content can achieve a sufficiently high NOₓ-purifying performance at high temperature conditions. When rhodium is used in large quantity, however, superiority in cost will be reduced.

D1 = EP 1 932 589 discloses a catalyst having a layer A (Ce-rich / inside = lower layer) and layer B (Zr-rich / outside = upper layer). According to the general disclosure of D1 a relative proportion for ZrO₂ of 50 to 95 wt-% (in both of the layers A and B) translates into a Ce/Zr ratio of about 5.3/100 - 100/100.

The Examples of D1 uses in both layers 80 wt-% ZrO₂ translating into 20 wt-% CeO₂ or Ce/Zr of 25/100 (Embodiment 1 of D1). According to Embodiment 11 of D1 the Ce/Zr is 150/100. So the broad general range as disclosed by D1 similar to the specific Examples as disclosed by D1 still leaves some room for improvement of the catalyst performance.

### Disclosure of Invention

An object of the present invention is to achieve a high NOₓ-purifying performance at high temperature conditions with a small amount of precious metal used.

According to an aspect of the present invention, there is provided an exhaust gas-purifying catalyst comprising a substrate, a lower layer formed on the substrate and including a first composite oxide, palladium and platinum, the first composite oxide including cerium, zirconium, and an element selected from the group consisting of rare-earth elements other than cerium and alkaline-earth elements, and a mass ratio of platinum with respect to palladium falling within a range of 1/50 to 1/20, wherein the first composite oxide has an equivalent oxide ratio of cerium with respect to zirconium falling within a range of 80/100 to 90/100; and an upper layer formed on the lower layer and including a second composite oxide and rhodium, the second composite oxide including zirconium and an element selected from the group consisting of rare-earth elements other than cerium and alkaline-earth elements, and op- tionally c e r i u m and having an atomic ratio of cerium with respect to zirconium smaller than that of the first composite oxide, wherein the second composite oxide has an equivalent oxide ratio of cerium with respect to zirconium being 10/100 or less.

### Brief Description of Drawings

FIG. 1 is a perspective view schematically showing an exhaust gas-purifying catalyst according to an embodiment of the present invention;
FIG. 2 is a sectional view schematically showing an example of structures that can be employed in the
   exhaust gas-purifying catalyst shown in FIG. 1; and
FIG. 3 is a graph showing an NOₓ-purifying performance.

### Best Mode for Carrying Out the Invention

Embodiments of the present invention will be described below.

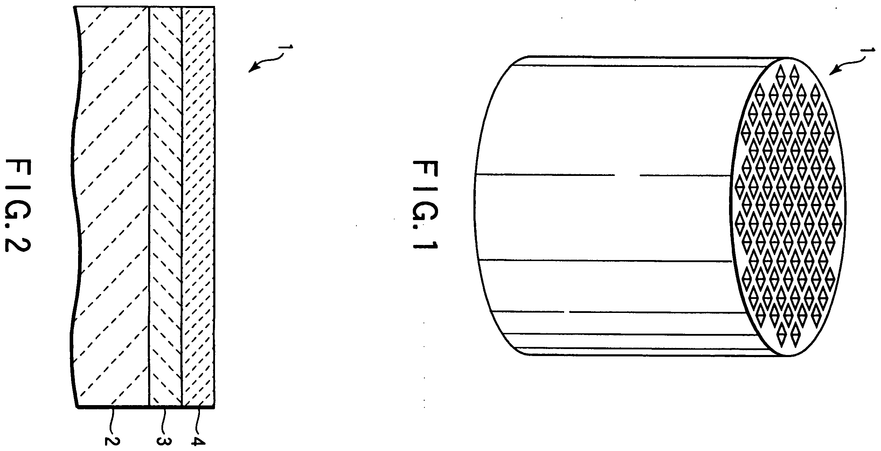

FIG. 1 is a perspective view schematically showing an exhaust gas-purifying catalyst according to an embodiment of the present invention. FIG. 2 is a sectional view schematically showing an example of structures that can be employed in the exhaust gas-purifying catalyst shown in FIG. 1.

The exhaust gas-purifying catalyst 1 shown in FIGS. 1 and 2 is a monolith catalyst. The exhaust gas-purifying catalyst 1 includes a substrate 2 such as a monolith honeycomb substrate. Typically, the substrate 2 is made of ceramics such as cordierite.

On the wall of the substrate 2, a lower layer 3 is formed. The lower layer 3 includes a first composite oxide, palladium and platinum.

The first composite oxide includes cerium, zirconium, and an element selected from the group consisting of rare-earth elements other than cerium and alkaline-earth elements. The first composite oxide may be a composite oxide having a single composition or a mixture including a plurality of composite oxides.

As the rare-earth element of the first composite oxide other than cerium, one or more of praseodymium, lanthanum, yttrium and neodymium can be used, for example.

As the alkaline-earth element of the first composite oxide, one or more of barium, strontium, calcium and magnesium can be used, for example.

As the first composite oxide, a composite oxide including cerium, zirconium, lanthanum and yttrium; a composite oxide including cerium, zirconium, lanthanum and barium; a composite oxide including cerium, zirconium, neodymium and yttrium; a composite oxide including cerium, zirconium, lanthanum, neodymium and praseodymium; or a composite oxide including cerium, zirconium, neodymium, praseodymium and calcium can be used, for example.

The sum of equivalent oxide contents for cerium and zirconium in the first composite oxide, that is, the sum of ceria and zirconia contents is set, for example, within a range of 5 to 30% by mass. In the case where this value is small or great, it is possible that a sufficient performance is not achieved.

In the first composite oxide, the mass ratio of ceria with respect to zirconia is set, within a range of 80/100 to 90/100. In the case where this value is small, it is possible that the oxygen storage capacity of the first
oxide is insufficient. When a large amount of an oxygen storage material is used in order to compensate for this, it is possible that the heat capacity increases to reduce the activity at low temperatures. In the case where this value is great, it is possible that the oxygen storage capacity is not developed efficiently and thus an exhaust gas is not sufficiently purified due to the reduced oxygen storage capacity.

The precious metal content of the lower layer 3 is set, for example, within a range of 0.5 to 3.0% by mass. In the case where this value is small, achieving a sufficient exhaust gas-purifying capacity is difficult. When this value is increased, the cost will increase and the sintering thereof will become prone to occur.

In the lower layer 3, the mass ratio of platinum with respect to palladium is set, for example, within a range of 1/50 to 1/20, and typically within a range of 1/50 to 1/30. When this value is decreased, achieving a high NOₓ-purifying performance in high temperature conditions becomes difficult. When this value is increased, the superiority in cost will be reduced.

The lower layer 3 may further include a first refractory carrier having a heat stability superior to that of the first composite oxide. As the material of the first refractory carrier, alumina, zirconia, titania, ceria or silica can be used, for example.

The coating amount of the lower layer 3 per 1 L of volumetric capacity of the substrate 2 is set, for example, within a range of 20 to 200g. In the case where the coating amount is small, achieving a sufficient exhaust gas-purifying capacity is difficult. In the case where the coating amount is large, the heat capacity of the exhaust gas-purifying catalyst 1 increases.

On the lower layer 3, an upper layer 4 is formed. The upper layer 4 includes a second composite oxide and rhodium.

The second composite oxide further includes zirconium and an element selected from the group consisting of rare-earth elements other than cerium and alkaline-earth elements. The second composite oxide may be a composite oxide having a single composition or a mixture including a plurality of composite oxides.

As the rare-earth element of the second composite oxide other than cerium, one or more of praseodymium, lanthanum, yttrium and neodymium can be used, for example. The second composite oxide may further include cerium.

As the alkaline-earth element of the second composite oxide, one or more of barium, strontium, calcium and magnesium can be used, for example.

As the second composite oxide, a composite oxide including cerium, zirconium, lanthanum and neodymium; a composite oxide including cerium, zirconium, yttrium and strontium; a composite oxide including cerium, zirconium, lanthanum and praseodymium; a composite oxide including cerium, zirconium, lanthanum and yttrium; or their corresponding composite oxides from which cerium is omitted can be used, for example.

The sum of equivalent oxide contents for cerium and zirconium in the second composite oxide is set, for example, within a range of 5 to 30% by mass. In the case where this value is small or great, it is possible that a sufficient performance is not achieved.

The second composite oxide has an atomic ratio of cerium with respect to zirconium smaller than that of the first composite oxide.This increases the NOₓ-purifying performance in high temperature conditions as compared with the case where the ratio for the first composite oxide and the ratio for the second composite oxide are set equal to each other or the case where the ratio for the first composite oxide is set smaller than the ratio for the second composite oxide.

In the second composite oxide, the mass ratio of ceria with respect to zirconia is set at 10/100 or less. In the case where this value is great, it is possible that the oxygen storage capacity hinders reactions and purification and thus
the catalytic performance is reduced.

The rhodium content of the upper layer 4 is set, for example, within a range of 0.1 to 2.0% by mass. In the case where this value is small, achieving a sufficient exhaust gas-purifying capacity is difficult. When this value is increased, the cost will increase and the sintering thereof will become prone to occur.

The upper layer 4 may further includes a second refractory carrier having a heat stability superior to that of the second composite oxide. As the material of the second refractory carrier, alumina, zirconia, titania, ceria or silica can be used, for example.

The coating amount of the lower upper 4 per 1 L of volumetric capacity of the substrate 2 is set, for example, within a range of 20 to 200g. In the case where the coating amount is small, achieving a sufficient exhaust gas-purifying capacity is difficult. In the case where the coating amount is increased, the heat capacity of the exhaust gas-purifying catalyst 1 will increase.

The exhaust gas-purifying catalyst 1 may further include a layer other than the lower layer 3 and the upper layer 4, for example, a layer including an oxygen storage material such as ceria. This additional layer may be placed between the substrate 2 and the lower layer 3, between the lower layer 3 and the upper layer 4, or above the upper layer 4.

Examples of the present invention will be described below.

### <Preparation of catalyst C1 not according to the invention but for purpose of comparison>

In this example, the exhaust gas-purifying catalyst 1 as shown in principal in FIG. 2 was prepared by the following method.

First, aqueous platinum nitrate containing 0.064g of platinum, aqueous palladium nitrate containing 1.94g of palladium, 50g of alumina powder, 100g of composite oxide powder A1, 20g of barium sulfate, 200g of deionized water were mixed together to prepare slurry. As the composite oxide powder A1, used was the one containing cerium, zirconium, and a rare-earth element other than cerium at equivalent oxide contents of 40, 50 and 10 parts by mass, respectively. Lanthanum and yttrium were used as the rare-earth element other than cerium. Hereinafter, the slurry is referred to as "slurry S1".

Subsequently, a monolith honeycomb substrate 2 was coated with the whole amount of the slurry S1. Here, used was a monolith honeycomb substrate having a volumetric capacity of 1.0 L and made ofcordierite. The monolith honeycomb substrate 2 was dried at 250°C for 1 hour. A lower layer 3 before firing was thus formed on the monolith honeycomb substrate 2.

Next, aqueous rhodium nitrate containing 0.5g of rhodium, 50g of alumina powder, 50g of composite oxide
powder B1, and 200g of deionized water were mixed together to prepare slurry. As the composite oxide powder B1, used was the one containing cerium, zirconium, and a rare-earth element other than cerium at equivalent oxide contents of 20.8, 69.2 and 10 parts by mass, respectively. Lanthanum and neodymium were used as the rare-earth element other than cerium. Hereinafter, the slurry is referred to as "slurry S2".

Subsequently, the above monolith honeycomb substrate 2 was coated with the whole amount of the slurry S2. The monolith honeycomb substrate 2 was dried at 250°C for 1 hour. An upper layer 4 before firing was thus formed on the unfired lower layer 3.

Thereafter, the monolith honeycomb substrate 2 was fired at 500°C for 1 hour. The exhaust gas-purifying catalyst 1 shown in FIG. 2 was thus completed. Hereinafter, the exhaust gas-purifying catalyst 1 is referred to as "catalyst C1".

### <Preparation of catalyst C2>

Aqueous rhodium nitrate containing 0.5g of rhodium, 50g of alumina powder, 50g of composite oxide powder B2, and 200g of deionized water were mixed together to prepare slurry. As the composite oxide powder B2, used was the one containing cerium, zirconium, and a rare-earth element other than cerium at equivalent oxide contents of 5.1, 84.9 and 10 parts by mass, respectively. Lanthanum and neodymium were used as the rare-earth element other than cerium. Hereinafter, the slurry is referred to as "slurry S3".

In this example, the exhaust gas-purifying catalyst 1 shown in FIG. 2 was prepared by the same method as that described for the catalyst C1 except that the slurry S3 was used instead of the slurry S2. Hereinafter, the exhaust gas-purifying catalyst 1 is referred to as "catalyst C2".

### <Preparation of catalyst C3>

Aqueous rhodium nitrate containing 0.5g of rhodium, 50g of alumina powder, 50g of composite oxide powder B3, and 200g of deionized water were mixed together to prepare slurry. As the composite oxide powder B3, used was the one containing zirconium and a rare-earth element other than cerium at equivalent oxide contents of 90 and 10 parts by mass, respectively. Lanthanum and neodymium were used as the rare-earth element other than cerium. Hereinafter, the slurry is referred to as "slurry S4".

In this example, the exhaust gas-purifying catalyst 1 shown in FIG. 2 was prepared by the same method as that described for the catalyst C1 except that the slurry S4 was used instead of the slurry S2. Hereinafter, the exhaust gas-purifying catalyst 1 is referred to as "catalyst C3".

### <Preparation of catalyst C4 not according to the invention but for the purpose of comparison>

Aqueous platinum nitrate containing 0.064g of
platinum, aqueous palladium nitrate containing 1.94g of palladium, 50g of alumina powder, 100g of composite oxide powder A2, 20g of barium sulfate, and 200g of deionized water were mixed together to prepare slurry. As the composite oxide powder A2, used was the one containing cerium, zirconium and a rare-earth element other than cerium at equivalent oxide contents of 52.9, 37.1 and 10 parts by mass, respectively. Lanthanum and yttrium were used as the rare-earth element other than cerium. Hereinafter, the slurry is referred to as "slurry S5".

In this example, the exhaust gas-purifying catalyst 1 shown in FIG. 2 was prepared by the same method as that described for the catalyst C1 except that the slurry S5 was used instead of the slurry S1 and the slurry S3 was used instead of the slurry S2. Hereinafter, the exhaust gas-purifying catalyst 1 is referred to as "catalyst C4".

### <Preparation of catalyst C5>

Aqueous platinum nitrate containing 0.064g of platinum, aqueous palladium nitrate containing 1.94g of palladium, 50g of alumina powder, 100g of composite oxide powder A3, 20g of barium sulfate, and 200g of deionized water were mixed together to prepare slurry. As the composite oxide powder A3, used was the one containing cerium, zirconium and a mixture of a rare-earth element other than cerium and an alkaline-earth element at equivalent oxide contents of 40, 50 and 10 parts by mass, respectively. Praseodymium was used as the rare-earth element other than cerium, while barium was used as the alkaline-earth element. Hereinafter, the slurry is referred to as "slurry S6".

In this example, the exhaust gas-purifying catalyst 1 shown in FIG. 2 was prepared by the same method as that described for the catalyst C1 except that the slurry S6 was used instead of the slurry S1 and the slurry S3 was used instead of the slurry S2. Hereinafter, the exhaust gas-purifying catalyst 1 is referred to as "catalyst C5".

### <Preparation of catalyst C6>

Aqueous rhodium nitrate containing 0.5g of rhodium, 50g of alumina powder, 50g of composite oxide powder B4, and 200g of deionized water were mixed together to prepare slurry. As the composite oxide powder B4, used was the one containing cerium, zirconium and a rare-earth element other than cerium at equivalent oxide contents of 5.1, 84.9 and 10 parts by mass, respectively. Neodymium and yttrium were used as the rare-earth element other than cerium. Hereinafter, the slurry is referred to as "slurry S7".

In this example, the exhaust gas-purifying catalyst 1 shown in FIG. 2 was prepared by the same method as that described for the catalyst C1 except that the slurry S7 was used instead of the slurry S2. Hereinafter, the exhaust gas-purifying catalyst 1 is referred to as "catalyst C6".

### <Preparation of catalyst C7>

Aqueous platinum nitrate containing 0.095g of platinum, aqueous palladium nitrate containing 1.9g of palladium, 50g of alumina powder, 100g of the composite oxide powder A1, 20g of barium sulfate, and 200g of deionized water were mixed together to prepare slurry. Hereinafter, the slurry is referred to as "slurry S8".

In this example, the exhaust gas-purifying catalyst 1 shown in FIG. 2 was prepared by the same method as that described for the catalyst C1 except that the slurry S8 was used instead of the slurry S1 and the slurry S3 was used instead of the slurry S2. Hereinafter, the exhaust gas-purifying catalyst 1 is referred to as "catalyst C7".

### <Preparation of catalyst C8>

Aqueous platinum nitrate containing 0.049g of platinum, aqueous palladium nitrate containing 1.95g of palladium, 50g of alumina powder, 100g of the composite oxide powder A1, 20g of barium sulfate, and 200g of deionized water were mixed together to prepare slurry. Hereinafter, the slurry is referred to as "slurry S9".

In this example, the exhaust gas-purifying catalyst 1 shown in FIG. 2 was prepared by the same method as that described for the catalyst C1 except that the slurry S9 was used instead of the slurry S1 and the slurry S3 was used instead of the slurry S2. Hereinafter, the exhaust gas-purifying catalyst 1 is referred to as "catalyst C8".

### <Preparation of catalyst C9>

Aqueous platinum nitrate containing 0.039g of platinum, aqueous palladium nitrate containing 1.96g of palladium, 50g of alumina powder, 100g of the composite oxide powder A1, 20g of barium sulfate, and 200g of deionized water were mixed together to prepare slurry. Hereinafter, the slurry is referred to as "slurry S10".

In this example, the exhaust gas-purifying catalyst 1 shown in FIG. 2 was prepared by the same method as that described for the catalyst C1 except that the slurry S10 was used instead of the slurry S1 and the slurry S3 was used instead of the slurry S2. Hereinafter, the exhaust gas-purifying catalyst 1 is referred to as "catalyst C9".

### <Preparation of catalyst C10 not according to the invention but for the purpose of comparison>

Aqueous platinum nitrate containing 0.064g of platinum, aqueous palladium nitrate containing 1.94g of palladium, 50g of alumina powder, 100g of composite oxide powder A4, 20g of barium sulfate, 200g of deionized water were mixed together to prepare slurry. As the composite oxide powder A4, used was the one containing cerium, zirconium, and a rare-earth element other than cerium at equivalent oxide contents of 5.1, 84.9 and 10 parts by mass, respectively. Lanthanum and
yttrium were used as the rare-earth element other than cerium. Hereinafter, the slurry is referred to as "slurry S11".

Then, aqueous rhodium nitrate containing 0.5g of rhodium, 50g of alumina powder, 50g of composite oxide powder B5, and 200g of deionized water were mixed together to prepare slurry. As the composite oxide powder B5, used was the one containing cerium, zirconium, and a rare-earth element other than cerium at equivalent oxide contents of 52.9, 37.1 and 10 parts by mass, respectively. Lanthanum and neodymium were used as the rare-earth element other than cerium. Hereinafter, the slurry is referred to as "slurry S12".

In this example, the exhaust gas-purifying catalyst 1 shown in FIG. 2 was prepared by the same method as that described for the catalyst C1 except that the slurry S11 was used instead of the slurry S1 and the slurry S12 was used instead of the slurry S2. Hereinafter, the exhaust gas-purifying catalyst 1 is referred to as "catalyst C10".

### <Preparation of catalyst C11>

Aqueous platinum nitrate containing 0.064g of platinum, aqueous palladium nitrate containing 1.94g of palladium, 50g of alumina powder, 100g of composite oxide powder A5, 20g of barium sulfate, 200g of deionized water were mixed together to prepare slurry. As the composite oxide powder A5, used was the one containing cerium and zirconium at equivalent oxide contents of 44.4 and 55.6 parts by mass, respectively. Hereinafter, the slurry is referred to as "slurry S13".

In this example, the exhaust gas-purifying catalyst 1 shown in FIG. 2 was prepared by the same method as that described for the catalyst C1 except that the slurry S13 was used instead of the slurry S1 and the slurry S3 was used instead of the slurry S2. Hereinafter, the exhaust gas-purifying catalyst 1 is referred to as "catalyst C11".

### <Preparation of catalyst C12>

Aqueous rhodium nitrate containing 0.5g of rhodium, 50g of alumina powder, 50g of composite oxide powder B6, and 200g of deionized water were mixed together to prepare slurry. As the composite oxide powder B6, used was the one containing cerium and zirconium at equivalent oxide contents of 5.7 and 94.3 parts by mass, respectively. Hereinafter, the slurry is referred to as "slurry S14".

In this example, the exhaust gas-purifying catalyst 1 shown in FIG. 2 was prepared by the same method as that described for the catalyst C1 except that the slurry S14 was used instead of the slurry S2. Hereinafter, the exhaust gas-purifying catalyst 1 is referred to as "catalyst C12".

### <Preparation of catalyst C13 not according to the invention but for the purpose of comparison>

Aqueous platinum nitrate containing 0.064g of
platinum, aqueous palladium nitrate containing 1.94g of palladium, 50g of alumina powder, 100g of composite oxide powder A6, 20g of barium sulfate, 200g of deionized water were mixed together to prepare slurry. As the composite oxide powder A6, used was the one containing cerium and a rare-earth element other than cerium at equivalent oxide contents of 90 and 10 parts by mass, respectively. Lanthanum and yttrium were used as the rare-earth element other than cerium. Hereinafter, the slurry is referred to as "slurry S15".

In this example, the exhaust gas-purifying catalyst 1 shown in FIG. 2 was prepared by the same method as that described for the catalyst C1 except that the slurry S15 was used instead of the slurry S1 and the slurry S3 was used instead of the slurry S2. Hereinafter, the exhaust gas-purifying catalyst 1 is referred to as "catalyst C13".

### <Preparation of catalyst C14>

Aqueous platinum nitrate containing 0.033g of platinum, aqueous palladium nitrate containing 1.97g of palladium, 50g of alumina powder, 100g of the composite oxide powder A1, 20g of barium sulfate, 200g of deionized water were mixed together to prepare slurry. Hereinafter, the slurry is referred to as "slurry S16".

In this example, the exhaust gas-purifying catalyst 1 shown in FIG. 2 was prepared by the same method as that described for the catalyst C1 except that the slurry S16 was used instead of the slurry S1 and the slurry S3 was used instead of the slurry S2. Hereinafter, the exhaust gas-purifying catalyst 1 is referred to as "catalyst C14".

### <Preparation of catalyst C15>

Aqueous palladium nitrate containing 2.00g of palladium, 50g of alumina powder, 100g of the composite oxide powder A1, 20g of barium sulfate, 200g of deionized water were mixed together to prepare slurry. Hereinafter, the slurry is referred to as "slurry S17".

In this example, the exhaust gas-purifying catalyst 1 shown in FIG. 2 was prepared by the same method as that described for the catalyst C1 except that the slurry S17 was used instead of the slurry S1 and the slurry S3 was used instead of the slurry S2. Hereinafter, the exhaust gas-purifying catalyst 1 is referred to as "catalyst C15".

Constituents of the lower layer 3 and the upper layer 4 of the catalysts C1 to C15 are summarized in the following Tables 1 and 2. In Tables 1 and 2, the column denoted by "CeO₂/ZrO₂" shows mass ratios of ceria with respect to zirconia. The column denoted by "RE,AE" shows the rare-earth elements and alkaline-earth elements used. The column denoted by "Pt/Pd" shows mass ratios of platinum with respect to palladium. The column denoted by "Precious metal amount (g)" shows total amounts of the precious metals contained in the lower layer 3 and the upper layer 4.

**Table 1**

| Catalyst | Lower layer | | | Upper layer | | Precious metal amount (g) |
|---|---|---|---|---|---|---|
| | Ce02/Zr02 | RE, AE | Pt/Pd | Ce02/Zr02 | RE, AE | |
| C1* | 80/100 | La, Y | 1/30 | 30/100 | La,Nd | 2.504 |
| C2 | 80/100 | La, Y | 1/30 | 6/100 | La,Nd | 2.504 |
| C3 | 80/100 | La, Y | 1/30 | 0/100 | La,Nd | 2.504 |
| C4* | 100/70 | La, Y | 1/30 | 6/100 | La,Nd | 2.504 |
| C5 | 80/100 | Pr, Ba | 1/30 | 6/100 | La,Nd | 2.504 |
| C6 | 80/100 | La, Y | 1/30 | 6/100 | Nd,Y | 2.504 |
| C7 | 80/100 | La, Y | 1/20 | 6/100 | La,Nd | 2.495 |
| C8 | 80/100 | La, Y | 1/40 | 6/100 | La,Nd | 2.499 |
| C9 | 80/100 | La, Y | 1/50 | 6/100 | La,Nd | 2.499 |

**Table 2**

| Catalyst | Lower layer | | | Upper layer | | Precious metal amount (g) |
|---|---|---|---|---|---|---|
| | Ce02/Zr02 | RE, AE | Pt/Pd | Ce02/Zr02 | RE, AE | |
| C10* | 6/100 | La, Y | 1/30 | 100/70 | La,Nd | 2.504 |
| C11 | 80/100 | - | 1/30 | 6/100 | La, Nd | 2.504 |
| C12 | 80/100 | La, Y | 1/30 | 6/100 | - | 2.504 |
| C13* | 100/0 | La, Y | 1/30 | 6/100 | La,Nd | 2.504 |
| C14 | 80/100 | La, Y | 1/60 | 6/100 | La,Nd | 2.503 |
| C15 | 80/100 | La, Y | 0 | 6/100 | La,N | 2.500 |

| | | | | | | |
|---|---|---|---|---|---|---|
| *not according to the invention but for the purpose of comparison | | | | | | |

### <Tests>

Each of the catalysts C1 to C15 was mounted in an exhaust system for a gasoline engine having a piston displacement of 4,000 cc. Then, the engine was driven for 50 hours while an average engine speed was maintained at 3,500 rpm and the gas temperature at the inlet of the catalyst was kept at 800°C.

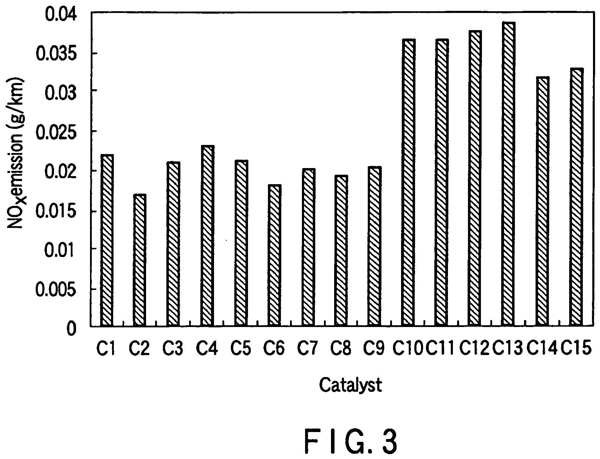

Next, each of the catalysts C1 to C15 was mounted on an automobile having an engine with a piston displacement of 1,500 cc. Then, an emission per 1 km of travel distance was determined for NOₓ emitted from the tailpipe by 10 and 15-mode method. FIG. 3 shows the results.

FIG. 3 is a graph showing an NOₓ-purifying performance. As will be apparent from the graph and Tables 1 and 2, although the catalysts C1 to C9 have a low platinum content and a low total precious metal content, they achieved a higher NOₓ-purifying performance at high temperature conditions as compared with the catalysts C10 to C15.

## Claims

1. An exhaust gas-purifying catalyst comprising:
a substrate;
a lower layer formed on the substrate and including a first composite oxide, palladium and platinum, the first composite oxide including cerium, zirconium, and an element selected from the group consisting of rare-earth elements other than cerium and alkaline-earth elements, and a mass ratio of platinum with respect to palladium falling within a range of 1/50 to 1/20, wherein the first composite oxide has an mass ratio of ceria with respect to zirconia falling within a range of 80/100 to 90/100; and
an upper layer formed on the lower layer and including a second composite oxide and rhodium, the second composite oxide including zirconium, an element selected from the group consisting of rare-earth elements other than cerium and alkaline-earth elements, and optionally cerium and having an atomic ratio of cerium with respect to zirconium smaller than that of the first composite oxide, wherein the second composite oxide has an mass ratio of ceria with respect to zirconia being 10/100 or less.

2. The exhaust gas-purifying catalyst according to claim 1, wherein the first composite oxide includes at least one element selected from the group consisting of lanthanum, yttrium, neodymium and praseodymium, and
wherein the second composite oxide includes at least one element selected from the group consisting of lanthanum, yttrium, neodymium and praseodymium.

## Patentansprüche

1. Ein Abgasreinigungskatalysator, aufweisend:
ein Substrat;
eine untere, auf dem Substrat gebildete Schicht, die ein erstes Mischoxid einschließt, Palladium und Platin, wobei das erste Mischoxid Cer, Zirkon und ein Element einschließt, ausgewählt aus der Gruppe bestehend aus Seltenerdenelementen außer Cer und Erdalkalielementen, und wobei ein Massenverhältnis von Platin bezüglich Palladium in den Bereich von 1/50 bis 1/20 fällt, wobei das erste Mischoxid ein Massenverhältnis von Ceroxid bezüglich Zirkonoxid hat, das in den Bereich von 80/100 bis 90/100 fällt; und
eine obere, auf der unteren Schicht gebildete Schicht, die ein zweites Mischoxid und Rhodium einschließt, wobei das zweite Mischoxid Zirkon einschließt und ein Element, ausgewählt aus der Gruppe bestehend aus Seltenerdenelementen außer Cer und Erdalkalielementen, und gegebenenfalls Cer, und welches ein kleineres Atomverhältnis von Cer in Bezug auf Zirkon als das des ersten Mischoxids hat, wobei das zweite Mischoxid ein Massenverhältnis von Ceroxid bezüglich Zirkonoxid von 10/100 oder geringer hat.

2. Abgasreinigungskatalysator nach Anspruch 1, wobei das erste Mischoxid wenigstens ein Element einschließt, ausgewählt aus der Gruppe bestehend aus Lanthan, Yttrium, Neodym und Praseodym, und
wobei das zweite Mischoxid wenigstens ein Element einschließt, ausgewählt aus der Gruppe bestehend aus Lanthan, Yttrium, Neodym und Praseodym.

## Revendications

1. Catalyseur de purification de gaz d'échappement comprenant :
un substrat ;
une couche inférieure formée sur le substrat et incluant un premier oxyde composite, du palladium et du platine, le premier oxyde composite incluant du cérium, du zirconium, et un élément choisi dans le groupe consistant en des éléments des terres rares autres que le cérium et des éléments alcalino-terreux, et un rapport massique entre le platine et le palladium se situant dans une plage de 1/50 à 1/20, dans lequel le premier oxyde composite a un rapport massique entre l'oxyde de cérium et l'oxyde de zirconium se situant dans une plage de 80/100 à 90/100 ; et
une couche supérieure formée sur la couche inférieure et incluant un second oxyde composite et du rhodium, le second oxyde composite incluant du zirconium, un élément choisi dans le groupe consistant en des éléments des terres rares autres que le cérium et des éléments alcalino-terreux, et facultativement du cérium et ayant un rapport atomique entre le cérium et le zirconium plus petit que celui du premier oxyde composite, dans lequel le second oxyde composite a un rapport massique entre l'oxyde de cérium et l'oxyde de zirconium qui est de 10/100 ou moins.

2. Catalyseur de purification de gaz d'échappement selon la revendication 1, dans lequel le premier oxyde composite inclut au moins un élément choisi dans le groupe consistant en le lanthane, l'yttrium, le néodyme et le praséodyme, et
dans lequel le second oxyde composite inclut au moins un élément choisi dans le groupe consistant en le lanthane, l'yttrium, le néodyme et le praséodyme.
